# FASCICULE DE BREVET EUROPEEN

(11) **EP 0 532 470 B1**
(45) Date de publication et mention de la délivrance du brevet: **21.05.1997**
(21) Numéro de dépôt: 92810692.1
(22) Date de dépôt: 10.09.1992
(51) Int. Cl.: G02B 6/30, G02B 6/42

(54) **Procédé pour coupler une fibre optique avec un guide d'onde optique intégré et dispositif micromécanique de couplage obtenu**
Verfahren zur Kopplung einer optischen Faser an einen optischen Wellenleiter und die so hergestellte mikromechanische Koppelvorrichtung
Method for coupling an optical fibre to an optical waveguide and micromechanical coupling device obtained therefrom

(30) Priorité: 10.09.1991 CH 2654/91
(43) Date de publication de la demande: 17.03.1993
(73) Titulaire: CENTRE SUISSE D'ELECTRONIQUE ET DE MICROTECHNIQUE S.A., 2007 Neuchâtel (CH)
(72) Inventeur: Parriaux, Olivier, CH-1005 Lausanne (CH); Bergqvist, Johan Wilhelm, CH-2014 Bôle (CH)
(74) Mandataire: Brulliard, Joel

(56) Documents cités:
- EP-A- 0 419 767
- WO-A-91/13378
- GB-A- 2 219 414
- US-A- 4 079 404
- PROCEEDINGS OF THE IEEE, vol. 70, no. 5, mai 1982, pages 420-457, New York, US; K.E. PETERSON: "Silicon as a mechanical material"
- PROCEEDINGS OF THE SPIE, vol. 803, avril 1987, pages 72-79, Den Haag, NL; D. MÜNCHMEYER et al.: "Accuracy limits and potential applications of the LIGA technique in integrated optics"
- Journal of Lightwave Technology, Vol.6, No.6, Juin 1988, pages 862-871

## Description

La présente invention se rapporte aux procédés et aux moyens de couplage mécaniques de guides de lumière avec des éléments opto-électroniques en général et concerne, plus particulièrement, un procédé pour coupler une (ou plusieurs) fibre optique avec un guide d'onde optique intégré et le dispositif micromécanique de couplage obtenu.

La demande de brevet EP-A-0419 767 décrit un exemple de positionnement d'un premier substrat en silicium, supportant une diode laser, dans un second substrat, également en silicium, supportant une fibre optique. Le premier substrat est disposé dans une cavité réalisée dans le second, ledit premier substrat et ladite cavité étant réalisés au moyen de procédés lithographiques. Les faces du premier substrat coopèrent avec les parois de la cavité pour assurer à l'ensemble un positonnement défini.

Le brevet US 4,756,591 de K. Fischer et al. décrit un dispositif de couplage d'une fibre optique à un composant optoélectronique comportant un guide d'onde optique. L'alignement entre la fibre optique et le composant optoélectronique s'effectue par l'intermédiaire d'un support de fibres. Ledit support de fibres est en silicium et comporte un sillon en forme de "V".

L'alignement du coeur de la fibre optique avec le guide d'onde nécessite des sillons en forme de "V" d'une profondeur importante de l'ordre de 100 µm et donc une orientation des axes du monocristal de silicium à 0,1° près pour obtenir une reproductibilité de ladite profondeur avec une précision de quelques dizièmes de micrométres.

La précision dudit alignement est fonction de l'orientation prise par la fibre optique lors de son montage dans le sillon en forme de "V". L'orientation, pour être efficace, nécessite l'emploi d'un sillon de longueur importante. De plus, le positionnement du composant optoélectronique vis-à-vis du support impose aux surfaces en contact une planéité d'une grande précision.

Edmond J. Murphy fait une revue, dans la publication "Fiber Attachment For Guided Wave Devices", Journal of Lightwave Technology, Vol. 6, No. 6, June 1988, pages 862 à 871, de l'état de la technique dans le domaine des méthodes et des dispositifs d'alignement de fibres optiques avec des guides d'ondes optiques intégrés. Ce document décrit, à la page 867 et à la figure 9 (reproduite à la Fig. 1 de la présente demande), une méthode et un dispositif micromécanique de couplage de fibres optiques avec des guides d'ondes optiques intégrés dans un composant optique. Le composant optique intégré est en verre ou en LiNbO₃ et comprend au moins un guide d'onde optique intégré et des premiers moyens de positionnement de type mâle. Ces premiers moyens de positionnement comportent au moins une face perpendiculaire au plan du composant optique intégré. Le substrat est en silicium et comprend au moins un sillon en forme de "V", dans lequel est maintenue une fibre optique. Le substrat supportant la fibre comprend également des seconds moyens de positionnement de type femelle en forme de V. Les premiers et les seconds moyens de positionnement sont tels qu'ils s'emboîtent les uns dans les autres.

Les six degrés de liberté dont est doté tout corps se déplaçant dans l'espace sont en général définis comme constitués de trois mouvements linéaires le long de trois axes orthogonaux X-X, Y-Y et Z-Z appelés communément mouvements longitudinal (axe X-X), latéral (axe Y-Y) et vertical (axe Z-Z), et de trois mouvements de rotation respectivement autour de ces axes appelés communément mouvements de roulis (axe X-X), de tangage (axe Y-Y) et de lacet (axe Z-Z).

Le procédé de l'art antérieur permet un couplage automatique et un alignement supprimant quatre degrés de liberté auxdits substrats sur un total de six.

Conformément au procédé de l'art antérieur, le couplage d'une fibre optique avec un guide d'onde optique intégré est obtenu en disposant les moyens de positionnement de type mâle, de section longitudinale rectangulaire, à l'intérieur des moyens de positionnement de type femelle en forme de "V" gravés dans le substrat de silicium. Puis, les deux substrats sont pressés l'un contre l'autre et glissés dans le plan de contact jusqu'à ce que les arêtes des moyens de positionnement de type mâle viennent en butée contre les flancs des moyens de positionnement de type femelle en forme de "V".

La publication de E.-J. Murphy, citée ci-dessus, montre comment positionner un composant optique selon une direction transverse et par rapport à un deuxième substrat. Le positionnement longitudinal du premier substrat est obtenu grâce à un troisième substrat fixé au deuxième substrat et venant en butée contre la face latérale de ce premier substrat.

Les inconvénients de ce procédé pour coupler une fibre optique avec un guide d'onde optique intégré et du dispositif obtenu sont cités ci-après.

Les moyens de positionnement de type mâle ont une très faible hauteur, de l'ordre de 2 micromètres, car réalisés par attaque sèche d'une couche mince déposée sur le substrat du composant optique intégrée. Afin qu'ils puissent jouer leur rôle de butée mécanique, il est nécessaire de presser fortement les deux surfaces en contact, ce qui augmente la force nécessaire au glissement des deux substrats pour arriver en butée.

De plus, la faible largeur des moyens de positionnement de type mâle fait que le contact avec les flancs du "V" se fera à la base de celui-ci, c'est-à-dire là où il est mécaniquement le moins bien défini.

Les surfaces d'appui conjuguées des moyens de positionnement selon l'art antérieur sont données par l'intersection entre les arêtes des moyens de positionnement de type mâle et les flancs respectifs des moyens de positionnement de type femelle. Une telle structure d'une butée mécanique n'est pas judicieuse d'un point de vue mécanique car les arêtes peuvent se briser ou se déformer dans le cas d'un métal. De plus, la précision du positionnement relatif dépendra de l'épaisseur des moyens de positionnement de type mâle et de leur forme, caractéristiques pouvant ne pas être facilement reproductibles.

Le dispositif de l'art antérieur nécessite l'utilisation d'un troisième substrat dont la face latérale en butée avec la face latérale du premier substrat (le composant optique) définit la position longitudinale de ce premier substrat ainsi que sa position angulaire. Ces deux positions sont donc tributaires de la position longitudinale et angulaire du troisième substrat sur le deuxième substrat.

Aussi un but de la présente invention est-il un procédé pour coupler au moins une fibre optique avec un guide d'onde optique intégré et un dispositif micromécanique de couplage ne présentant pas les inconvénients des procédés et des dispositifs de l'art antérieur.

Un autre but de l'invention est d'imposer au substrat comportant les guides d'ondes optiques intégrés, le substrat sur lequel sont fixés les fibres optiques étant pris comme référence, une position latérale et verticale unique, et de supprimer tout mouvement de roulis, de tangage et de lacet de ce même substrat vis-à-vis de l'autre.

Les caractéristiques de l'invention sont définies dans les revendications.

Un avantage du procédé pour coupler une fibre optique avec un guide d'onde optique intégré et du dispositif micromécanique de couplage obtenu par le procédé de l'invention est que les moyens de positionnement de type mâle peuvent avoir une hauteur importante, de l'ordre de 30 à 100 µm. Par conséquent, il n'est pas nécessaire de presser très fortement les deux substrats pour que le rôle de butée mécanique soit joué par les moyens de positionnement de type mâle et femelle. Le glissement entre plans de contact peut ainsi être exécuté sans frottement important.

D'autres avantages de l'invention, du fait que les moyens de positionnement de type femelle ont des faces perpendiculaires au substrat, sont que:
- les surfaces d'appui conjuguées de la butée mécanique sont du type plan sur plan, les conditions d'appui mécanique sont alors meilleures, et
- la précision du positionnement relatif ne dépend pas de la hauteur des moyens de positionnement de type mâle, ni de la qualité de leurs arêtes.

D'autres objets, caractéristiques et avantages de la présente invention apparaîtront plus clairement à la lecture de la description suivante, description faite à titre purement illustratif et en relation avec les dessins joints dans lesquels:
- La fig. 1: montre un dispositif micromécanique de couplage de l'art antérieur cité ci-dessus.
- La fig. 2: montre le dispositif micromécanique de couplage obtenu par le procédé de l'invention.
- Les figures 3.a à 3.c: montrent différents modes de réalisation de l'élément essentiel de l'invention que constitue la structure du type "tenon-mortaise".

La présente invention concerne en particulier un procédé pour coupler au moins une fibre optique **8** avec un guide d'onde optique intégré **6**. Le procédé consiste à intégrer le guide d'onde optique dans un premier substrat **2**, à réaliser dans un second substrat **3** au moins un sillon **7** en forme de "V" parallèle à l'axe longitudinal X-X du second substrat, à réaliser sur le premier substrat **2** des premiers moyens de positionnement **4** et à réaliser dans le second substrat **3** des seconds moyens de positionnement **5**.

Le premier substrat est en verre ou en LiNbO₃, ou en tout autre matériau, et comprend des premiers moyens de positionnement **4** de type mâle. Ces premiers moyens de positionnement comportent au moins une face, ci-après appelée surface d'appui **4a**, perpendiculaire au plan dudit premier substrat. Le second substrat est découpé dans un monocristal de silicium et comprend des seconds moyens de positionnement **5** de type femelle.

Selon le procédé de l'invention, le second substrat **3** est découpé dans un monocristal de silicium de telle manière que les indices de Miller du plan cristallin défini par la surface **3a**, ci-après appelée plan de contact, de ce second substrat sont (100). De plus, chaque second moyen de positionnement **5** de type femelle consiste en au moins une mortaise dont au moins une face, ci-après appelée surface d'appui **5a**, est perpendiculaire au plan du second substrat et fait, de préférence, un angle de ± 45° avec l'axe longitudinal X-X de ce second substrat. De plus, les indices de Miller du plan cristallin défini par la surface d'appui **5a** des seconds moyens de positionnement sont (010).

Dans le cas où les seconds moyens de positionnement **5** de type femelle conporteraient une seconde surface d'appui **5b** également perpendiculaire au plan du second substrat, les indices de Miller du plan cristallin défini par cette seconde surface d'appui des seconds moyens de positionnement sont (001), de manière que ces deux surfaces d'appui soient orthogonales entre elles.

De façon moins spécifique que ce qui vient d'être défini ci-dessus, les indices de Miller de la famille de plans cristallins des surfaces d'appui des seconds moyens de positionnement sont {100}.

Toujours selon le procédé de l'invention, chaque premier moyen de positionnement **4** de type mâle consiste en au moins un tenon dont au moins une surface d'appui **4a** perpendiculaire au plan du premier substrat est parallèle à l'une des surfaces d'appui des seconds moyens de positionnement, laquelle surface est perpendiculaire au plan dudit second substrat.

Le premier substrat **2** et le second substrat **3** sont disposés l'un sur l'autre, de manière que leurs plans de contact **2a**, **3a** respectifs soient en contact l'un avec l'autre.

Les premier et second moyens de positionnement sont destinés à être engagés les uns dans les autres. Les moyens de positionnement de type femelle ont, avantageusement, des surfaces d'appui dont la profondeur est supérieure à la hauteur des moyens de positionnement de type mâle.

Selon l'invention, les premiers moyens de positionnement **4** de type mâle, à savoir: un ou, de préférence, deux tenons, sont réalisés à l'aide d'une technique de croissance d'une couche métallique sur le premier substrat **2**.

Un premier procédé de fabrication (cf. I. Milosevic et al. "Polyimide Enables High Lead Count TAB", Semiconductor International, October 1988, Cahners Publishing Company) du ou des tenons comporte principalement les étapes suivantes:
- dépôt sur le plan de contact **2a** du premier substrat d'un film de résine polyimide photosensible négative d'environ 20 µm d'épaisseur ou plus;
- illumination du film de résine photosensible par projection à travers un masque approprié et à l'aide d'un "stepper";
- développement de la résine;
- dissolution de la résine située à l'emplacement du ou des tenons;
- évaporation d'un film métallique sur ledit emplacement;
- croissance galvanique d'une couche métallique sur ledit film métallique; et
- dissolution de la résine restante.

Conformément au procédé de l'invention, ces étapes s'effectuent sur le plan de contact **2a** du premier substrat.

Ladite croissance s'effectue sur ledit premier substrat de telle manière que le ou les tenons ainsi réalisés à la surface du premier substrat s'emboîtent dans la ou l'une des mortaises. La croissance de la couche métallique pour former le tenon est réalisée sur une hauteur de l'ordre de 20 µm ou plus.

Un autre procédé de fabrication du ou des tenons est décrit, par exemple, dans la publication "Accuracy limits and potential applications of the LIGA technique in integrated optics", D. Münchmeyer et al., SPIE Volume 803, 2-3 April 1987, The Hague.

Les seconds moyens de positionnement **5** de type femelle, à savoir: une ou, de préférence, deux mortaises, ainsi que les sillons en forme de "V", sont réalisées à l'aide d'une technique d'attaque planaire sur le second substrat **3**, lequel est, par exemple, découpé dans un monocristal de silicium.

La ou les mortaises, ainsi que les sillons en forme de "V", réalisées dans le second substrat sont obtenues à partir, par exemple, de l'un des procédés décrits dans la demande de brevet français No 2 500 642.

Selon l'un de ces procédés, un masque d'attaque chimique est réalisé sur le second substrat, à l'aide des étapes suivantes:
- on dépose une couche de résine photosensible sur la surface devant recevoir un masque d'attaque chimique;
- on réalise sur la couche de résine photosensible un photomasque ayant un schéma prédéterminé avec une partie transparente à la lumière et une partie opaque à la lumière;
- on expose le photomasque à la lumière et on développe le schéma;
- on enlève la partie transparente du photomasque et la couche de résine photosensible correspondante.
Les mortaises et les sillons en forme de "V" sont obtenues par attaque chimique du substrat découvert.

Conformément au procédé de l'invention, le masque d'attaque chimique est réalisé sur le plan de contact **3a** du second substrat de telle manière que la ou les mortaises ainsi réalisées s'imbriquent dans le ou les tenons respectifs. De plus, la ou les surfaces d'appui **5a** de la ou des mortaises font, de préférence, un angle de ± 45° par rapport à l'axe longitudinal X-X du second substrat. L'attaque chimique pour former la ou les mortaises est effectuée sur une épaisseur de l'ordre de 20 µm ou plus.

Selon un deuxième procédé de fabrication décrit dans la demande de brevet français cité ci-dessus:
- on polit le plan de contact **3a** du second substrat;
- on forme une couche de silice SiO₂ sur la surface polie;
- on réalise une couche de résine photosensible sur la couche de silice SiO₂ ou Si₃N₄;
- on réalise un masque d'attaque chimique ayant un schéma prédéterminé sur la couche de résine photosensible;
- on expose le masque d'attaque chimique à la lumière et on enlève la partie exposée;
- on enlève la partie de la couche de silice correspondant à la partie exposée du masque d'attaque chimique;
- on soumet le substrat avec le schéma à une attaque chimique pour former au moins une mortaise, ainsi que des sillons en forme de "V".

Conformément au procédé de l'invention, la surface polie sur laquelle est réalisé le masque d'attaque chimique est le plan de contact **3a** du second substrat de manière que la ou les mortaises ainsi réalisées soient susceptibles de s'imbriquer dans les tenons respectifs. De plus, la ou les surfaces d'appui **5a** de la ou des mortaises font un angle de ± 45° par rapport à l'axe longitudinal X-X du second substrat. L'attaque chimique pour former lesdites mortaises est réalisée sur une épaisseur de l'ordre de 20 µm ou plus.

Il ressort du procédé de l'invention que l'axe de symétrie de chaque tenon, et par suite la positin du substrat, est défini de façon unique dans le plan du premier substrat. En effet, bien que les procédés de réalisation des tenons ne permettent pas d'obtenir des tenons de dimensions strictement pré-établies, la position des axes de symétrie des tenons reste quant à elle parfaitement définie.

Il ressort également du procédé de l'invention que la position du plan de symétrie vertical des mortaises est également définie de façon unique par rapport à l'axe latéral Y-Y.

Une imprécision de la position des surfaces d'appui des mortaises selon l'axe longitudinal X-X est due au fait que l'attaque chimique dans la direction longitudinale X-X n'est pas autolimité puisque dépendante de paramètres telles la durée de l'attaque chimique et la concentration des bains chimiques. Toutefois, du fait que cette dépendance est parfaitement connue par l'homme du métier, les procédés de réalisation des mortaises permettent d'obtenir des surfaces d'appui **5a** dont la position selon l'axe longitudinal X-X peut être strictement pré-établie.

Il résulte de ce qui précède que l'axe de symétrie des premiers moyens de positionnement est, après positionnement du premier substrat sur le second, dans le plan de symétrie vertical des seconds moyens de positionnement.

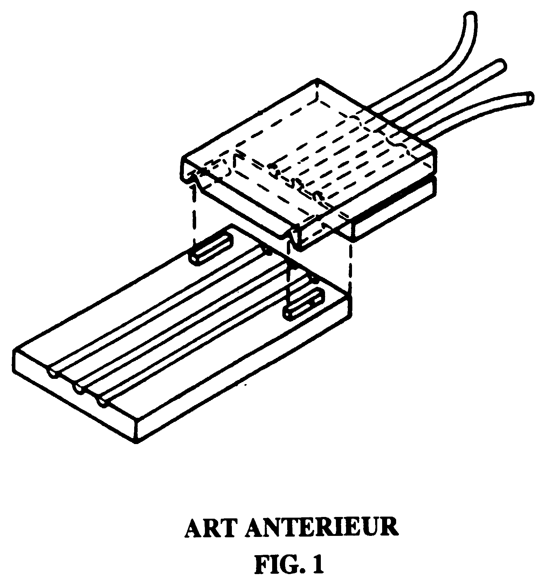

La figure 1 montre un dispositif micromécanique connu de couplage de fibres optiques avec des guides d'ondes optiques intégrés dans un composant optique. Ce dispositif de l'art antérieur est décrit par E.-J. Murphy et est cité dans le préambule de la description.

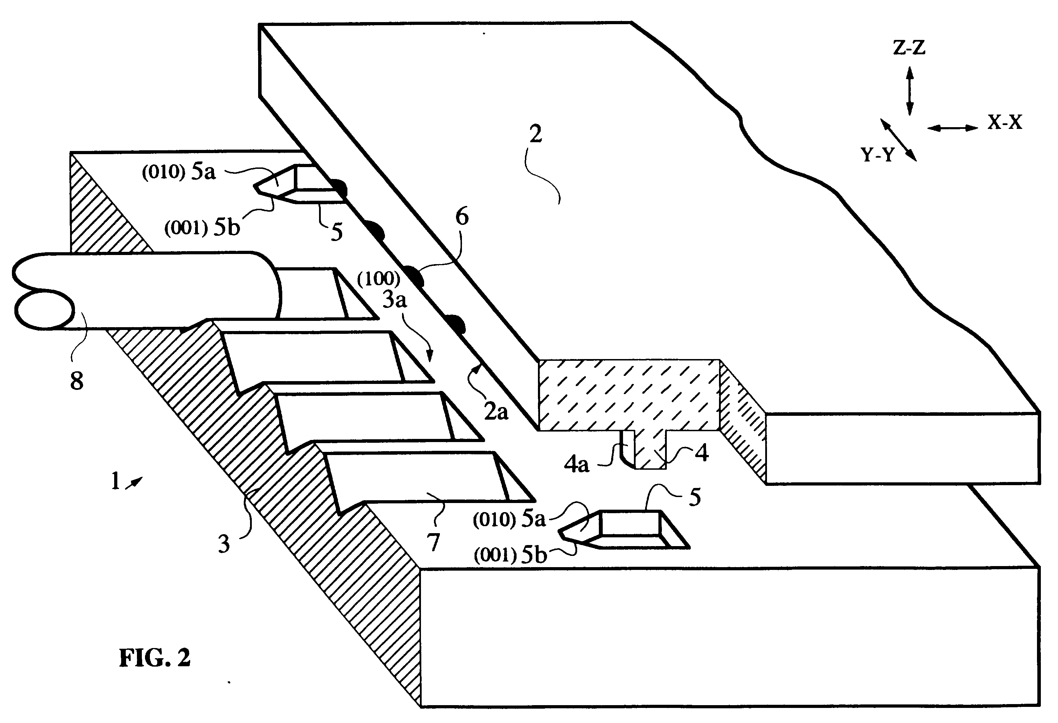

Le dispositif micromécanique de positionnement obtenu par le procédé de l'invention est représenté à la figure 2.

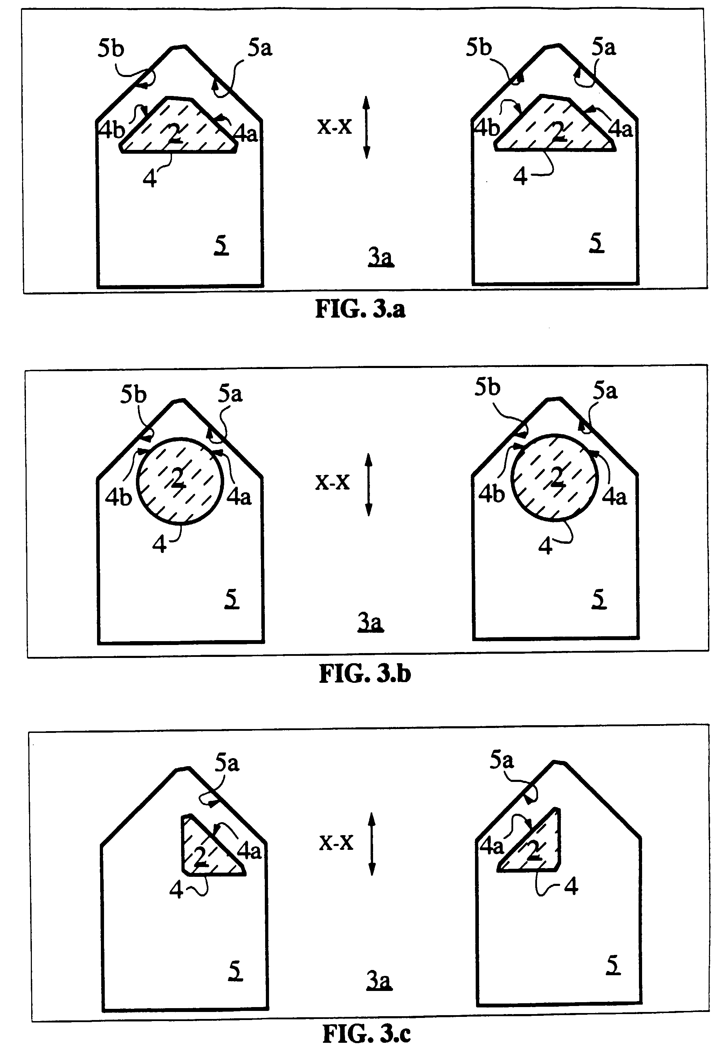

L'ensemble des trois axes orthogonaux X-X, Y-Y, Z-Z est symbolisé par des flèches sur les figures 2 et 3.

L'invention porte également sur un dispositif micromécanique de couplage d'au moins une fibre optique **8** avec un guide d'onde optique intégré **6**, le guide d'onde optique étant intégré dans un premier substrat **2** et la fibre optique étant disposée sur un second substrat **3** dans un sillon **7** en forme de "V" parallèle à l'axe longitudinal X-X du second substrat. Le premier substrat comprend des premiers moyens de positionnement **4** de type mâle, lesquels comportent au moins une face perpendiculaire au plan du premier substrat, et le second substrat comprend des seconds moyens de positionnement **5** de type femelle, les premiers moyens de positionnement étant disposés face aux seconds moyens de positionnement.

Conformément à l'invention, le second substrat **3** est découpé dans un monocristal de silicium de telle manière que les indices de Miller du plan cristallin défini par la surface **3a**, ci-après appelée plan de contact, de ce second substrat sont (100). De plus, chacun des seconds moyens de positionnement **5** de type femelle consiste en au moins une mortaise dont au moins une surface d'appui **5a** est perpendiculaire au plan de contact **3a** du second substrat **3** et fait un angle de ± 45° avec l'axe longitudinal X-X du second substrat. De plus, les indices de Miller du plan cristallin défini par la surface d'appui **5a** des seconds moyens de positionnement sont (010).

Dans le cas où les seconds moyens de positionnement **5** de type femelle conporteraient une seconde surface d'appui **5b** également perpendiculaire au plan du second substrat, les indices de Miller du plan cristallin définis par cette seconde surface d'appui des seconds moyens de positionnement sont (001), de manière que ces deux surfaces d'appui soient orthogonales entre elles.

De façon moins spécifique que ce qui vient d'être défini ci-dessus, les indices de Miller de la famille de plans cristallins des surfaces d'appui des seconds moyens de positionnement sont {100}.

Toujours selon l'invention, chacun des premiers moyens de positionnement **4** de type mâle consiste en au moins un tenon dont au moins une surface d'appui **4a** est perpendiculaire au plan de contact **2a** du premier substrat **2** et est parallèle à au moins une des surfaces d'appui **5a** des seconds moyens de positionnement, de manière à définir une position latérale unique de l'un des substrats, l'autre étant pris comme référence, par la formation, de préférence, d'un jeu **4a**, **5a** ou **4b**, **5b** ou de deux jeux **4a**, **5a** et **4b**, **5b** de surfaces d'appui conjuguées.

En d'autres termes, dans le dispositif micromécanique de positionnement obtenu, la position latérale (c'est-à-dire transversalement par rapport à l'axe longitudinal X-X) de l'un des substrats, l'autre substrat étant pris comme référence, est unique. Une telle position est définie par au moins un jeu de surfaces d'appui conjuguées **4a**, **5a**,**4b**, **5b** appartenant aux premier et second moyens de positionnement.

De plus, l'un des plans de contact **2a** est maintenu sur le plan de contact restant **3a**, de manière à définir une position verticale unique et à supprimer les mouvements de roulis, de tangage et de lacet de l'un des substrats, l'autre étant pris comme référence.

En d'autres termes, dans un tel dispositif, la position verticale (c'est-à-dire le long de l'axe vertical Z-Z) de ce même substrat, l'autre substrat étant pris comme référence, est unique. Une telle position est définie par les surfaces d'appui conjuguées, constituées des plans de contact **2a**, **3a** des premier et second substrats.

Enfin, la fibre optique est positionnée dans le sillon en forme de "V" de manière à faire face à un guide d'onde optique intégré.

Le dispositif micromécanique de couplage est tel que la transmission de l'énergie lumineuse entre les guides optiques soit maximale.

Les surfaces d'appui conjuguées et les plans de contact définis ci-dessus sont représentés soit à la figure 2, soit aux figures 3.a à 3.c.

Les figures 3.a à 3.c montrent différents modes de réalisation de l'élément essentiel de l'invention que constitue la structure du type "tenon-mortaise" **4**,**5**.

Dans une première réalisation (fig. 3.a) les deux tenons **4** réalisés sur le premier substrat **2** sont triangulaires et comportent chacun deux surfaces d'appui planes **4a**, **4b**. Les deux mortaises **5** obtenues dans le second substrat **3** ont une base, par exemple rectangulaire ou carrée, prolongée par un triangle isocèle dont les deux côtés égaux constituent, pour chaque mortaise, deux surfaces d'appui planes **5a**,**5b**. Après positionnement du premier substrat sur le second substrat, ou encore lorsque les plans de contact **2a**,**3a** des substrats respectifs sont maintenus dans un même plan, les surfaces d'appui conjuguées **4a**, **5a**; **4b**, **5b** définissent deux jeux de surfaces d'appui conjuguées.

Dans une deuxième réalisation (fig. 3.b) les deux tenons **4** réalisés sur le premier substrat **2** sont cylindriques et comportent chacun deux surfaces d'appui bombées **4a**, **4b**. Les deux mortaises **5** obtenues dans le second substrat **3** sont identiques à celles décrites précédemment. Après positionnement du premier substrat sur le second substrat, les surfaces d'appui conjuguées sont en contact entre elles et définissent également deux jeux de surfaces d'appui conjuguées **4a**, **5a** et **4b**, **5b**. Dans le cas présent, les surfaces d'appui conjuguées se limitent en fait à des génératrices perpendiculaires au plan de contact des substrats.

Dans chacune des réalisations précédentes, le nombre de jeux de surfaces d'appui conjuguées **4a**, **5a**; **4b**, **5b**, est fonction, d'une part, du nombre d'éléments du type "tenon-mortaise" réalisés et, d'autre part, de la forme des tenons et des mortaises constituant ces éléments. Le positionnement entre substrats est optimal lorsqu'il n'existe qu'un seul jeu de surfaces d'appui conjuguées, lesdites surfaces étant séparées les unes des autres transversalement par rapport à l'axe longitudinal X-X des substrats. La figure 3.c montre une troisième réalisation de l'élément "tenon-mortaise" comportant un seul jeu de surfaces d'appui conjuguées, séparées les unes des autres transversalement par rapport à l'axe longitudinal X-X.

Compte tenu de ce qui précède, il est clair que les réalisations de l'élément "tenon-mortaise" ne se limitent pas à celles présentées ci-dessus. De manière générale, les moyens de positionnement consistent en au moins un tenon, par exemple en forme de demi-cylindre, comportant au moins une surface d'appui plane ou bombée, combiné à une mortaise comportant au moins une surface d'appui plane ou bombée.

Les surfaces d'appui des seconds moyens de positionnement sont séparées les unes des autres transversalement et/ou longitudinalement par rapport à l'axe longitudinal X-X et/ou transversal Y-Y, respectivement.

Bien que la présente invention ait été décrite dans le cadre d'exemples de réalisation particuliers, il est clair, cependant qu'elle est susceptible de modifications ou de variantes sans sortir de son domaine.

En particulier, le second substrat peut encore être découpé dans un monocristal de silicium de telle manière que les indices de Miller du plan cristallin défini par le plan de contact de ce second substrat sont, par exemple, (110).

Les indices de Miller des plans cristallins définis par les surfaces d'appui des seconds moyens de positionnement de type femelle, peuvent encore être {111}.

## Revendications

1. Procédé pour coupler au moins une fibre optique (8) avec un guide d'onde optique intégré (6), comprenant les étapes consistant à:
- intégrer ledit guide d'onde optique dans une face principale plane (2a) d'un premier substrat (2) et selon une direction parallèle à l'axe longitudinal du premier substrat;
- réaliser, dans une face principale plane (3a) d'un second substrat (3), au moins un sillon (7) en forme de "V" parallèle à l'axe longitudinal (X-X) dudit second substrat;
- réaliser sur le premier substrat (2) au moins deux premiers moyens de positionnement (4) de type mâle, faisant tous deux saillie de ladite face principale plane (2a) dudit premier substrat en étant situés de part et d'autre dudit guide optique intégré, chacun desdits premiers moyens de positionnement comportant au moins une face (4a) perpendiculaire à ladite face principale dudit premier substrat;
- réaliser sur le second substrat (3) au moins deux seconds moyens de positionnement (5) de type femelle, ménagés tous deux dans ladite face principale plane (3a) dudit second substrat en étant situés de part et d'autre dudit sillon en forme de "V",
- disposer ledit premier substrat (2) sur ledit second substrat (3) de manière à faire s'accoupler les moyens de positionnement des deux substrats, et
- positionner ladite fibre optique dans le sillon en "V" de manière à la disposer en face dudit guide d'onde intégré, lesdits premiers moyens de positionnement de type mâle et lesdits seconds moyens de positionnement de type femelle étant respectivement agencés sur lesdits premier et second substrats de façon à pouvoir être accouplés les uns aux autres en vue d'assurer ainsi l'alignement dudit guide optique intégré et de ladite fibre optique, le procédé étant
**caractérisé en ce que:**
- les premiers (4) moyens de positionnement de type mâle sont réalisés par croissance galvanique d'un matériau;
- les seconds (5) moyens de positionnement de type femelle sont réalisés par des procédés photolithographiques;
- chaque second moyen de positionnement (5) de type femelle consiste en une mortaise présentant au moins une surface d'appui (5a, 5b) perpendiculaire à ladite face principale plane (3a) dudit second substrat (3) et faisant un angle de 45° avec l'axe longitudinal (X-X) dudit second substrat;
- chaque premier moyen de positionnement (4) de type mâle consiste en un tenon présentant au moins une surface d'appui (4a,4b) constituée par ladite face perpendiculaire à ladite face principale plane (2a) dudit premier substrat (2), ladite surface d'appui faisant un angle de 45° avec l'axe longitudinal dudit premier substrat, lesdites surfaces d'appui desdits tenons et desdites mortaises constituant ainsi au moins un jeu de surfaces d'appui conjuguées (4a, 5a ou 4b, 5b) permettant, lorsqu'elles sont amenées et maintenues en contact les unes avec les autres, de faire se coïncider les axes longitudinaux des deux substrats et de définir ainsi une position latérale unique de l'un des substrats par rapport à l'autre pris comme référence tout en supprimant tout mouvement possible de rotation d'un des substrats par rapport à l'autre autour d'un axe perpendiculaire à leurs faces principales planes; et
- chaque tenon (4) est dimensionné par rapport a la mortaise correspondante (5) de façon à permettre l'amenée et le maintien étroit l'une contre l'autre desdites faces principales planes (2a,3a), dites alors plans de contact, desdits premier et second substrats, de manière à définir une position unique de l'un des substrats par rapport à l'autre pris comme référence dans la direction perpendiculaire auxdits plans de contact et à supprimer tout mouvement possible de rotation de l'un des substrats par rapport à l'autre autour de tout axe s'étendant dans lesdits plans de contact desdits substrats, de sorte que, lorsque lesdites surfaces d'appui conjuguées desdits tenons et mortaises ainsi que lesdits plans de contact desdits substrats sont maintenus les uns contre les autres, ladite fibre optique se trouve alignée avec ledit guide d'onde optique intégré de manière que la transmission d'énergie lumineuse entre ces deux guides optiques soit maximale.

2. Procédé selon la revendication 1, dans lequel:
- le premier substrat (2) est en verre ou en LiNbO₃ et
- le second substrat (3) est en silicium monocristallin, découpé de façon que le plan de contact (3a) soit orienté suivant le plan cristallin dont les indices de Miller sont (100) ou (110).

3. Procédé selon la revendication 2, dans lequel les indices de Miller de la famille de plans cristallins suivant lesquels sont orientées les surfaces d'appui (5a, 5b) des seconds moyens de positionnement (5) de type femelle sont {100} ou {111}.

4. Procédé selon la revendication 3, dans lequel:
- les indices de Miller de la famille de plans cristallins suivant lesquels sont orientées les surfaces d'appui (5a, 5b) des seconds moyens de positionnement (5) de type femelle sont {100} et
- les indices de Miller du plan cristallin suivant lequel est orientée l'une (5a) des surfaces d'appui des seconds moyens de positionnement (5) de type femelle sont (010), les indices de Miller du plan cristallin suivant lequel est orientée l'autre surface d'appui (5b), si elle existe, sont (001).

5. Dispositif micromécanique de couplage d'au moins une fibre optique (8) avec un guide d'onde optique intégré (6), ledit dispositif comprenant un premier substrat (2) dans une face principale plane (2a) duquel ledit guide d'onde optique à coupler est intégré en s'étendant parallèlement à l'axe longitudinal dudit premier substrat, et un second substrat (3) dans une face principale plane (3a) duquel un sillon (7) en forme de "V" recevant ladite fibre optique à coupler est ménagé, parallèlement à l'axe longitudinal (X-X) dudit second substrat, ledit premier substrat (2) comprenant au moins deux premiers moyens de positionnement (4) de type mâle faisant tous deux saillie de ladite face principale plane (2a) dudit premier substrat en étant situés de part et d'autre dudit guide d'onde optique intégré, chacun desdits premiers moyens de positionnement comportant au moins une face (4a) perpendiculaire à ladite face principale dudit premier substrat, et ledit second substrat comprenant au moins deux seconds moyens de positionnement (5) de type femelle ménagés tous deux dans ladite face principale plane (3a) dudit second substrat en étant situés de part et d'autre dudit sillon en forme de "V", lesdits premiers moyens de positionnement de type mâle et lesdits seconds moyens de positionnement de type femelle étant respectivement agencés sur lesdits premier et second substrats de façon à pouvoir être accouplés les uns aux autres en vue d'assurer ainsi l'alignement dudit guide optique intégré et de ladite fibre optique, **caractérisé en ce que** :
- les premiers (4) moyens de positionnement de type mâle sont réalisés par croissance galvanique d'un matériau;
- les seconds (5) moyens de positionnement de type femelle sont réalisés par des procédés photolithographiques;
- chaque second moyen de positionnement (5) de type femelle consiste en une mortaise présentant au moins une surface d'appui (5a, 5b) perpendiculaire à ladite face principale plane dudit second substrat (3) et faisant un angle de 45° avec l'axe longitudinal (X-X) dudit second substrat;
- chaque premier moyen de positionnement (4) de type mâle consiste en un tenon présentant au moins une surface d'appui (4a, 4b) constituée par ladite face perpendiculaire à ladite face principale plane (2a) dudit premier substrat (2), ladite surface d'appui faisant un angle de 45° avec l'axe longitudinal dudit premier substrat, lesdites surfaces d'appui desdits tenons et desdites mortaises constitutant ainsi au moins un jeu de surfaces d'appui conjuguées (4a, 5a ou 4b, 5b) permettant, lorsqu'elles sont amenées et maintenues en contact les unes avec les autres, de faire se coïncider les axes longitudinaux des deux substrats et de définir ainsi une position latérale unique de l'un des substrats par rapport à l'autre pris comme référence tout en supprimant tout mouvement possible de rotation d'un des substrats par rapport à l'autre autour d'un axe perpendiculaire à leurs faces principales planes; et
- chaque tenon (4) est dimensionné par rapport à la mortaise (5) correspondante de façon à permettre l'amenée et le maintien étroit l'une contre l'autre desdites faces principales planes (2a, 3a), dites alors plans de contact, desdits premier et second substrats, de manière à définir une position unique de l'un des substrats par rapport à l'autre pris comme référence dans la direction perpendiculaire auxdits plans de contact et à supprimer tout mouvement possible de rotation de l'un des substrats par rapport à l'autre autour de tout axe s'étendant dans lesdits plans de contact desdits substrats, de sorte que, lorsque lesdites surfaces d'appui conjuguées desdits tenons et mortaises ainsi que lesdits plans de contact desdits substrats sont maintenus les uns contre les autres, ladite fibre optique se trouve alignée avec ledit guide d'onde optique intégré de manière que la transmission d'énergie lumineuse entre ces deux guides optiques soit maximale.

6. Dispositif selon la revendication 5, dans lequel:
- le premier substrat (2) est en verre ou en LiNbO₃ et
- le second substrat (3) est en silicium monocristallin, découpé de façon que le plan de contact (3a) soit orienté suivant le plan cristallin dont les indices de Miller sont (100) ou (110).

7. Dispositif selon la revendication 6, dans lequel les indices de Miller de la famille de plans cristallins suivant lesquels sont orientées les surfaces d'appui (5a, 5b) des seconds moyens de positionnement (5) de type femelle sont {100} ou {111}.

8. Dispositif selon la revendication 7, dans lequel:
- les indices de Miller de la famille de plans cristallins suivant lesquels sont orientées les surfaces d'appui (5a, 5b) des seconds moyens de positionnement (5) de type femelle sont {100} et
- les indices de Miller du plan cristallin suivant lequel est orientée l'une (5a) des surfaces d'appui des seconds moyens de positionnement (5) de type femelle sont (010), les indices de Miller du plan cristallin selon lequel est orientée l'autre surface d'appui (5b), si elle existe, sont (001).

## Patentansprüche

1. Verfahren zum Koppeln mindestens einer optischen Faser (8) mit einem integrierten optischen Wellenleiter, umfassend die Schritte:
- Integrieren des optischen Wellenleiters in eine ebene Hauptfläche (2a) eines ersten Substrats (2) und in einer Richtung parallel zur Längsachse des ersten Substrats,
- Realisieren mindestens einer V-förmigen Rille (7) in einer ebenen Hauptfläche (3a) eines zweiten Substrats (3) parallel zu der Längsachse (X-X) des zweiten Substrats,
- Realisieren mindestens zweier erster Positioniermittel (4) vom Auskragtyp auf dem ersten Substrat (2), welche beide von einer ebenen Hauptfläche (2a) des ersten Substrats auskragen und sich beidseits des integrierten optischen Wellenleiters befinden, welche ersten Positioniermittel jedes mindestens eine senkrecht zu der Hauptebene des ersten Substrats verlaufende Seite (4a) aufweisen,
- Realisieren mindestens zweier zweiter Positioniermittel (5) vom Einsenktyp auf dem zweiten Substrat, beide in eine ebene Hauptfläche (3a) des zweiten Substrats eingearbeitet und beidseits der V-förmigen Rille befindlich,
- Anordnen des ersten Substrats (2) auf dem zweiten Substrat (3) derart, daß sich die Positioniermittel beider Substrate kuppeln lassen, und
- Positionieren der optischen Faser in der V-Rille derart, daß sie gegenüber dem integrierten optischen Wellenleiter angeordnet ist, wobei die ersten Positioniermittel vom Auskragtyp und die zweiten Positioniermittel vom Einsenktyp jeweils auf dem ersten bzw. zweiten Substrat derart angeordnet sind, daß sie miteinander kuppelbar sind, um auf diese Weise die Ausfluchtung des integrierten optischen Wellenleiters und der optischen Faser sicherzustellen, welches Verfahren **dadurch gekennzeichnet** ist,
- daß die ersten (4) Positioniermittel vom Auskragtyp durch galvanisches Aufwachsen eines Materials realisiert werden,
- daß die zweiten (5) Positioniermittel vom Einsenktyp mittels photolithographischer Verfahren realisiert werden,
- daß jedes zweite Positioniermittel (5) vom Einsenktyp aus einer Ausnehmung mit mindestens einer Anlagefläche (5a, 5b) senkrecht zu der ebenen Hauptfläche (3a) des zweiten Substrats (3) und einen Winkel von 45° mit der Längsachse (X-X) des zweiten Substrats bildend besteht,
- daß jedes erste Positioniermittel (4) vom Auskragtyp aus einem Zapfen mit mindestens einer Anlagefläche (4a, 4b) besteht, gebildet von der zu der ebenen Hauptfläche (2a) des ersten Substrats (2) senkrechten Seite, welche Anlagefläche einen Winkel von 45° mit der Längsachse des ersten Substrats bildet, welche Anlageflächen der Zapfen und Ausnehmungen derart mindestens einen Satz von zugeordneten Anlageflächen (4a, 5a oder 4b, 5b) bilden, was es erlaubt, wenn sie in Kontakt miteinander gebracht und gehalten werden, die Längsachsen der beiden Substrate koinzident zu machen und auf diese Weise eine einzige seitliche Position des einen Substrats relativ zu dem als Referenz verwendeten andern zu definieren unter Unterdrückung jeglicher möglicher Verdrehbewegung eines der Substrate relativ zu dem andern um eine zu ihren ebenen Hauptflächen senkrechte Achse, und
- daß jeder Zapfen (4) relativ zu der entsprechenden Ausnehmung (5) so dimensioniert ist, daß das enge Anlegen und Halten einer der ebenen Hauptflächen (2a, 3a) des ersten und zweiten Substrats an der anderen, welche somit als Kontaktebenen bezeichnet werden, ermöglicht wird, um so eine einzige Position eines Substrats zu dem als Referenz verwendeten anderen in Richtung senkrecht zu den Kontaktebenen zu definieren und um jegliche mögliche Verdrehung des einen Substrats relativ zu dem anderen um jede sich in den Kontaktebenen der Substrate erstreckende Achse zu unterbinden, derart, daß dann, wenn die zugeordneten Anlageflächen der Zapfen und Ausnehmungen wie auch die Kontaktebenen der Substrate gegeneinander gehalten sind, die optische Faser mit dem integrierten optischen Wellenleiter derart ausgefluchtet ist, daß die Lichtenergieübertragung zwischen diesen beiden optischen Leitern maximal ist.

2. Verfahren nach Anspruch 1, bei dem
- das erste Substrat (2) aus Glas oder LiNbO₃ besteht und
- das zweite Substrat aus monokristallinem Silizium besteht, derart geschnitten, daß die Kontaktebene (3a) gemäß der Kristallebene mit den Miller-Indices (100) oder (110) orientiert ist.

3. Verfahren nach Anspruch 2, bei dem die Miller-Indices der Familie der Kristallebenen, gemäß denen die Anlageflächen (5a, 5b) der zweiten Positioniermittel (5) vom Einsenktyp orientiert sind, (100) oder (111) sind.

4. Verfahren nach Anspruch 3, bei dem
- die Miller-Indices der Familie von Kristallebenen, gemäß denen die Anlageflächen (5a, 5b) der zweiten Positioniermittel (5) vom Einsenktyp orientiert sind, (100) sind und
- die Miller-Indices der Kristallebene, gemäß der die eine (5a) der Anlageflächen der zweiten Positioniermittel (5) vom Einsenktyp orientiert ist, (010) sind, während die Miller-Indices der Kristallebene, gemäß der die andere Anlagefläche, falls sie existiert, orientiert ist, (001) sind.

5. Mikromechanische Kopplungsvorrichtung mindestens einer optischen Faser (8) mit einem integrierten optischen Wellenleiter, welche Vorrichtung ein erstes Substrat (2) umfaßt, in dessen eine ebene Hauptfläche (2a) der zu koppelnde optische Wellenleiter, sich parallel zur Längsachse des ersten Substrats erstreckend, integriert ist, und ein zweites Substrat (3) umfaßt, in dessen eine ebene Hauptseite (3a) eine V-förmige Rille (7) parallel zur Längsachse (X-X) des zweiten Substrats eingearbeitet ist, welche die zu koppelnde optische Faser aufnimmt, welches erste Substrat (2) mindestens zwei erste Positioniermittel (4) vom Auskragtyp umfaßt, welche beide von einer ebenen Hauptfläche (2a) des ersten Substrats auskragen und sich beidseits des integrierten optischen Wellenleiters befinden, welche ersten Positioniermittel jedes mindestens eine senkrecht zu der Hauptebene des ersten Substrats verlaufende Seite (4a) aufweisen, und das zweite Substrat (3) mindestens zwei zweite Positioniermittel (5) vom Einsenktyp umfaßt, beide in eine ebene Hauptfläche (3a) des zweiten Substrats eingearbeitet und beidseits der V-förmigen Rille befindlich, welche ersten Positioniermittel vom Auskragtyp und zweiten Positioniermittel vom Einsenktyp jeweils auf dem ersten bzw. zweiten Substrat derart ausgebildet sind, daß sie miteinander kuppelbar sind, um so die Ausfluchtung des integrierten optischen Wellenleiters und der optischen Faser sicherzustellen, **dadurch gekennzeichnet**,
- daß die ersten (4) Positioniermittel vom Auskragtyp durch galvanisches Aufwachsen eines Materials realisiert sind,
- daß die zweiten (5) Positioniermittel vom Einsenktyp mittels photolithographischer Verfahren realisiert sind,
- daß jedes zweite Positioniermittel (5) vom Einsenktyp aus einer Ausnehmung mit mindestens einer Anlagefläche (5a, 5b) senkrecht zu der ebenen Hauptfläche (3a) des zweiten Substrats (3) und einen Winkel von 45° mit der Längsachse (X-X) des zweiten Substrats bildend besteht,
- daß jedes erste Positioniermittel (4) vom Auskragtyp aus einem Zapfen mit mindestens einer Anlagefläche (4a, 4b) besteht, gebildet von der zu der ebenen Hauptfläche (2a) des ersten Substrats (2) senkrechten Seite, welche Anlagefläche einen Winkel von 45° mit der Längsachse des ersten Substrats bildet, welche Anlageflächen der Zapfen und Ausnehmungen derart mindestens einen Satz von zugeordneten Anlageflächen (4a, 5a oder 4b, 5b) bilden, was es erlaubt, wenn sie in Kontakt miteinander gebracht und gehalten werden, die Längsachsen der beiden Substrate koinzident zu machen und auf diese Weise eine einzige seitliche Position des einen Substrats relativ zu dem als Referenz verwendeten andern zu definieren unter Unterdrückung jeglicher möglicher Verdrehbewegung eines der Substrate relativ zu dem andern um eine zu ihren ebenen Hauptflächen senkrechte Achse, und
- daß jeder Zapfen (4) relativ zu der entsprechenden Ausnehmung (5) so dimensioniert ist, daß das enge Anlegen und Halten einer der ebenen Hauptflächen (2a, 3a) des ersten und zweiten Substrats an der anderen, welche somit als Kontaktebenen bezeichnet werden, ermöglicht wird, um so eine einzige Position eines Substrats zu dem als Referenz verwendeten anderen in Richtung senkrecht zu den Kontaktebenen zu definieren und um jegliche mögliche Verdrehung des einen Substrats relativ zu dem anderen um jede sich in den Kontaktebenen der Substrate erstreckende Achse zu unterbinden, derart, daß dann, wenn die zugeordneten Anlageflächen der Zapfen und Ausnehmungen wie auch die Kontaktebenen der Substrate gegeneinander gehalten sind, die optische Faser mit dem integrierten optischen Wellenleiter derart ausgefluchtet ist, daß die Lichtenergieübertragung zwischen diesen beiden optischen Leitern maximal ist.

6. Vorrichtung nach Anspruch 5, bei der
- das erste Substrat (2) aus Glas oder LiNbO₃ besteht und
- das zweite Substrat aus monokristallinem Silizium besteht, derart geschnitten, daß die Kontaktebene (3a) gemäß der Kristallebene mit den Miller-Indices (100) oder (110) orientiert ist.

7. Vorrichtung nach Anspruch 6, bei der die Miller-Indices der Familie der Kristallebenen, gemäß denen die Anlageflächen (5a, 5b) der zweiten Positioniermittel (5) vom Einsenktyp orientiert sind, (100) oder (111) sind.

8. Baugruppe nach Anspruch 7, bei der
- die Miller-Indices der Familie von Kristallebenen, gemäß denen die Anlageflächen (5a, 5b) der zweiten Positioniermittel (5) vom Einsenktyp orientiert sind, (100) sind und
- die Miller-Indices der Kristallebene, gemäß der die eine (5a) der Anlageflächen der zweiten Positioniermittel (5) vom Einsenktyp orientiert ist, (010) sind, während die Miller-Indices der Kristallebene, gemäß der die andere Anlagefläche, falls sie existiert, orientiert ist, (001) sind.

## Claims

1. Method of coupling at least one optical fibre (8) to an integrated optical waveguide (6), comprising steps consisting in:
• integrating said optical waveguide in a principal planar face (2a) of a first substrate (2) and in a direction parallel to the longitudinal axis of the first substrate;
• producing, ina principal planar face (3a) of a second substrate (3) at least one groove (7) in a V shape, parallel to the longitudinal axis (X-X) of said second substrate;
• producing on the first substrate (2) at least two first positioning means (4) of the male type, both projecting from said principal planar face (2a) of said first substrate and being located on either side of said integrated optical waveguide, each of said first positioning means comprising at least one face (4a) perpendicular to said principal face of said first substrate;
• producing on the second substrate (3) at least two second positioning means (5) of the female type, both arranged in said principal planar face (3a) of said second substrate and being situated on either side of said V-shaped groove;
• disposing said first substrate (2) on said second substrate (3) so as to cause the positioning means of the two substrates to couple, and
• positioning said optical fibre in the V -shaped groove so as to locate it opposite said integrated waveguide, said first positioning means of the male type and said second positioning means of the female type being respectively arranged on said first and second substrates so as to be capable of being coupled to one another with a view thus to ensuring alignment of said integrated waveguide and of said optical fibre, the method being characterised in that:
• the first (4) positioning means of the male type are produced by electrolytic growth of a material;
• the second (5) positioning means of the female type are produced by photolithographic means;
• each second positioning means (5) of the female type consists of a mortise having at least one support surface (5a, 5b) perpendicular to said principal planar face (3a) of said second substrate (3) and forming an angle of 45° with the longitudinal axis (X-X) of said second substrate;
• each first positioning means (4) of the male type consists of a tenon having at least one support surface (4a, 4b) constituted by said face perpendicular to said principal planar face (2a) of said first substrate (2), said support surface forming an angle of 45° with the longitudinal axis of said first substrate, said support surfaces of said tenons and said mortises constituting thus at least one set of conjoined support surfaces (4a, 5a or 4b, 5b) enabling, when they are brought into and held in contact with one another, the longitudinal axes of the two substrates to coincide and thus define a single lateral position of one of the substrates with respect to the other, taken as a reference, while eliminating any possible rotational movement of one of the substrates with respect to the other about an axis perpendicular to their principal planar faces; and
• each tenon (4) is so dimensioned with respect to the corresponding mortise as to enable said principal planar faces (2a, 3a) to be brought into and held in close contact with one another, then being termed contact planes, of said first and second substrates, so as to define a single position of one of the substrates with respect to the other, taken as a reference, in the direction perpendicular to the said contact planes, and to eliminate any possible rotational movement of one of the substrates with respect to the other about its axis extending in said contact planes of said substrates, so that, when said conjoined support surfaces of said tenons and mortises and said contact planes of said substrates are held against one another, said optical fibre is aligned with said integrated waveguide so that the transmission of luminous energy between these two optical guides is maximal.

2. Method according to claim 1, in which:
• the first substrate (2) is made of glass or of LiNbO₃ and
• the second substrate (3) is made of monocrystalline silicon, cut in such a way that the contact plane (3a) is oriented in accordance with the crystalline plane whose Millerian indices are (100) or (110).

3. Method according to claim 2, in which the Millerian indices of the family of crystalline planes according to which the support surfaces (5a, 5b) of the second positioning means (5) of the female type are (100) or (111).

4. Method according to claim 3, in which:
• the Millerian indices of the family of crystalline planes according to which the support surfaces (5a, 5b) of the second positioning means (5) of the female type are oriented are (100) and
• the Millerian indices of the crystalline plane according to which one (5a) of the support surfaces of the second positioning means (5) of the female type is oriented are (010), the Millerian indices of the crystalline plane according to which the other support surface (5b) is oriented, if it exists, being (001).

5. Micromechanical coupling device for at least one optical fibre (8) with an integrated waveguide (6), said device comprising a first substrate (2) in one principal planar face (2a) of which said optical waveguide to be coupled is integrated, extending parallel to the longitudinal axis of said first substrate, and a second substrate (3) in one principal planar face (3a) of which is arranged a groove (7) in a V shape receiving said optical fibre to be coupled, parallel to the longitudinal axis )X-X) of said second substrate, said first substrate (2) comprising at least two first positioning means (4) of the male type, both projecting from said principal planar face (2a) of said first substrate, being situated on either side of said integrated waveguide, each of said first positioning means comprising at least one face (4a) perpendicular to said principal face of said first substrate, and said second substrate comprising at least two second positioning means (5) of the female type, both arranged in said principal planar face (3a) of said second substrate, being situated on either side of said V -shaped groove, said first positioning means of the male type and said second positioning means of the female type being respectively arranged on said first and second substrates so as to be capable of being coupled to one another with a view thus to ensuring alignment of said integrated waveguide and of said optical fibre, characterised in that:
• the first (4) positioning means of the male type are produced by electrolytic growth of a material;
• the second (5) positioning means of the female type are made by photolithographic methods;
• each second positioning means (5) of the female type consists of a mortise having at least one support surface (5a, 5b) perpendicular to said principal planar face of said second substrate (3), forming an angle of 45° with the longitudinal axis (X-X) of said second substrate;
• each first positioning means (4) of the male type consists of a tenon having at least one support surface (4a, 4b) constituted by said face perpendicular to said principal planar face (2a) of said first substrate (2), said support surface forming an angle of 45° with the longitudinal axis of said first substrate, said support surfaces of said tenons and said mortises constituting thus at least one set of conjoined support surfaces (4a, 5a or 4b, 5b) enabling, when they are brought into and held in contact with one another, the longitudinal axes of the two substrates to coincide, thus defining a single lateral position of one of the substrates with respect to the other, taken as a reference, while eliminating any possible rotational movement of one of the substrates with respect to the other about an axis perpendicular to their principal planar faces; and
• each tenon (4) is dimensioned with respect to the corresponding mortise (5) so as to enable said principal planar faces (2a, 3a), then termed contact planes, of said first and second substrates, to be brought into and held in close contact with one another, so as to define a single position of one of the substrates with respect to the other, taken as a reference, in the direction perpendicular to said contact planes, and to eliminate any possible rotational movement of one of the substrates with respect to the other about any axis extending in said contact planes of said substrates, so that, when said conjoined support surfaces of said tenons and mortises and said contact planes of said substrates are held against one another, said optical fibre is aligned with said integrated waveguide in such a way that the transmission of luminous energy between these two optical guides is maximal.

6. Device according to claim 5, in which:
• the first substrate (2) is made of glass or of LiNbO₃ and
• the second substrate (3) is made of monocrystalline silicon, cut in such a way that the contact plane (3a) is oriented in accordance with the crystalline plane whose Millerian indices are (100) or (110).

7. Device according to claim 6, in which the Millerian indices of the family of crystalline planes according to which the support surfaces (5a, 5b) of the second positioning means (5) of the female type are oriented are(100) or (111).

8. Device according to claim 7, in which:
• the Millerian indices of the family of crystalline planes according to which the support surfaces (5a, 5b) of the second positioning means (5) of the female type are oriented are (100) and
• the Millerian indices of the crystalline plane according to which one (5a) of the support surfaces of the second positioning means (5) of the female type is oriented are (010), the Millerian indices of the crystalline plane according to which the other support surface (5b) is oriented, if it exists, are (001).
